Europäisches Patentamt

European Patent Office

Office européen des brevets

(11) Publication number: 0 294 871
A1

## (12) EUROPEAN PATENT APPLICATION

(21) Application number: 88201074.7

(22) Date of filing: 30.05.88

(51) Int. Cl.4: B23Q 16/00

(30) Priority: 08.06.87 IT 2081587

(43) Date of publication of application:
14.12.88 Bulletin 88/50

(84) Designated Contracting States:
AT BE CH DE ES FR GB GR IT LI LU NL SE

(71) Applicant: BARUFFALDI S.P.A.
Via Curiel 15
I-20097 San Donato Milanese Milan(IT)

(72) Inventor: Boffelli, Pier Carlo
Via P. Mascagni 20
Milano(IT)

(74) Representative: Raimondi, Alfredo, Dott. Ing.
Prof. et al
Studio Tecnico Consulenza Brevetti Piazzale
Cadorna 15
I-20123 Milano(IT)

(54) Rotating worktable for machine-tools having prefixed and continuously selectable locking positions.

(57) The workpiece-carrying rotating table for machine tools with discrete and steplessly selectable fixing positions according to this invention is constituted of a body (3) rotatably mounted on a fixed base (1), to which body there may be connected a table (6), to which workpieces may be secured for the purpose of machining them, which body is equipped with a rotary member capable of being stopped in any preselected position, this member being associated with a precision angular reading device (16, 17), and possesses members for blocking in predetermined positions, comprising crown gears (18, 9) which may be mutually engaged for blocking and disengaged for rotation, and comprises members for blocking in any, steplessly preselected positions comprising a brake pincers (27) which can be clamped onto a ring (25) integral with the rotatable body (3), the crown gears (18, 9) remaining disengaged in such conditions.

Fig. 1

## Rotating worktable for machine-tools having prefixed and continuously selectable locking positions.

The subject of the present invention is a workpiece-carrying rotating table for machine tools with discrete and steplessly selectable fixing positions.

The carrying out of many machining operations, such as milling, drilling and the like, requires that the workpiece being machined shall be rigidly supported in positions that are prefixed with respect to the tools or to the machine carrying the tool, and that the workpiece itself can then be orientated successively in various angular positions, to suit the various machining operations prescribed by the machining cycle.

For this purpose, devices are known comprising workpiece-carrying tables, to which the workpiece to be machined is secured in a defined position, and which can be rotated as required in front of the tools and blocked in the intended positions.

The accuracy of such blocking or fixing positions determines the quality of the machining carried out and must therefore be as high as possible; furthermore, it is frequently required that the movable part of the table shall be blocked or fixed in any angular position relative to the reference surfaces of the table itself, both in correspondence to finite values of sexagesimal subdivisions, for example every degree, and also in any intermediate values of such subdivisions.

To obtain tables with the possibility of stopping in predetermined positions, for example at every degree, tables are known having frontally toothed crown gears which can be engaged one into another, the number of teeth of which determine the number of different possible arresting and blocking angular positions.

Such tables possess optimum characteristics of positional accuracy and blocking rigidity when confronted with the loadings caused by the tangential forces of machining of the workpiece supported, but they are limited in their possible positions to discrete values, which correspond as stated to the number of teeth of the crowns themselves, and they do not allow steps in intermediate positions; with such tables, furthermore, it is not possible to carry out machining operations which require the simultaneous movement of the workpiece and of the tool.

Tables are also known which permit stopping in any position, by achieving blocking in the desired position by means of a friction brake without play, but such tables require a fairly expensive construction for providing positional sensors of sufficient accuracy and support devices for the rotating parts and operating systems without play, and furthermore they exhibit reduced structural rigidity under the machining forces.

The problem therefore arises of providing a table in which it shall be possible, on the one hand, to carry out machining operations with very high precision, made possible by the coupling of appropriate crown gears, and with corresponding rigidity, with stopping positions of a discrete number and, on the other hand, when necessary to carry out machining operations with the workpiece in any angular position and even in movement, without nevertheless thereby subjecting the mechanical parts which are of a high precision for this purpose to additional loadings in the case of blocking with the crown gears meshed in mutual engagement.

Said results are achieved by the present invention, which provides a workpiece-carrying rotating table for machine tools, with discrete and steplessly selectable fixing positions, which is constituted of a rotatable body, supported by a preloaded rolling support without play on a fixed base, to which there may be connected a table, on which workpieces can be secured for machining, which body is equipped with a rotary member which can be arrested in any preselected position, this member being associated with a precision angular reading device, and which possesses members for blocking in predetermined positions comprising frontally toothed crown gears which can be reciprocally engaged for blocking and disengaged for rotation, and members for blocking in any steplessly preselected positions, comprising a brake pincers capable of being clamped onto a ring integral with the rotatable body, the crown gears remaining in the disengaged position in such conditions.

In particular, in the workpiece-carrying rotating table according to this invention, the members for blocking in predetermined positions comprise a frontally toothed crown gear carried by the fixed base and concentric with a frontally toothed crown gear carried by the rotatable body, there being also present a frontally toothed ring which is axially movable, facing the aforementioned crown gears and capable of being simultaneously engaged with them, this ring being carried by an annular piston defining, between fixed base and rotatable body, closed chambers which can be hydraulically supplied under control with pressurized fluid, adapted for axially moving the annular piston between a raised position of disengagement of the axially movable ring carried by it from the crown gears of the rotatable body and of the fixed base, and a lowered position of engagement of the axially movable ring with the crown gears themselves.

With advantage, the rotatable body in conditions of blocking in predetermined positions, is subjected to axial forces that are at least partly counter-balanced, for the purpose of preventing additional loadings on the mechanical support and rotation devices.

For this purpose, in one preferred form of embodiment, the annular piston defines a chamber between its upwardly facing surface and a corresponding, downwardly facing surface of the rotatable body, the chamber being capable of being supplied with pressurized hydraulic fluid, adapted for producing, when fed into the chamber, a downward thrust upon the piston and a corresponding upward thrust upon the rotatable body, the downward thrust upon the piston being transmitted to the toothed ring secured to it and, from this ring, to the crown gear of the rotatable body, in at least partial equilibrium with the aforementioned upward thrust of the fluid on the rotatable body.

For the purpose of obtaining blocking in any angular position, in the rotating table the members for blocking in any positions comprise a ring integral with the rotatable body and an annular jaw integral with the fixed base and capable of being clamped onto the ring by means of actuator devices, the jaw being adapted for developing, by friction on the ring, a reaction in a tangential direction exceeding the maximum machining tangential forces envisaged for a workpiece mounted on the table, even with the frontally toothed ring in a raised position, disengaged from the corresponding crown gears.

Further details will be found from the following description, given by reference to the attached drawings, in which there are shown:

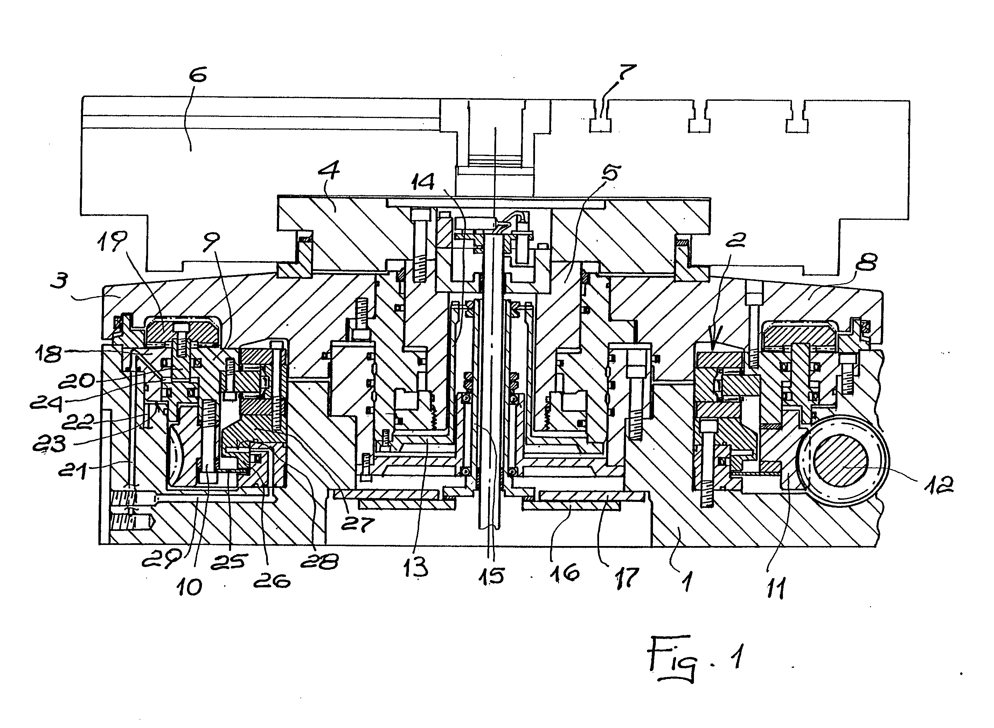

in Figure 1, the rotating table in axial section;

in Figure 2, a detail of the table of Figure 1 to a larger scale.

The rotating table according to this invention is composed, as illustrated, of a fixed base 1, on which there is supported by means of a radial and axial bearing 2, the rotating body 3.

In order to guarantee the precision and rigidity required, especially in the case of blocking in any desired position, the bearing 2 is of the preloaded type, without any axial or radial play, as known in the art.

The rotating body 3 is equipped with a movable part 4, connected to a hydraulically operated piston 5, by means of which it is possible to block in position a workpiece-carrying table 6, equipped with grooves 7 for rigidly fixing the workpieces undergoing machining.

The structure of the table 6 and of the hydraulic piston 5, together with the relevant supply means, is known and is therefore not further described.

The rotating body 3 is rigidly connected, by bolts 8, to a frontally toothed inner gear wheel 9, to which there is connected in turn, by means of screws 10, a toothed wheel 11, in backlash-free engagement with a worm screw 12.

The worm screw 12 is, in its turn, operated by a motor, not shown, through associated backlash-free transmission means, composed for example of a toothed belt; the structure of the worm screw, together with the associated means for coupling it without backlash to the gear wheel, and also the motor and associated transmission means, are known and are therefore not described in further detail.

To the rotating body 3 there is also rotationally rigidly connected, by means of a bell 13, coupling 14 and sleeve 15, the rotor 16 of an angular position sensor of sufficient accuracy, of which the stator 17 is connected to the fixed base 1, as shown schematically in the Figure.

The angular position sensor of the required accuracy for the present use is known and is commercially available, for example under the commercial name "Inductosyn".

The fixed base 1 possesses, corresponding to the frontally toothed gear wheel 9 of the rotating body, a frontally toothed external gear wheel 18, rigidly connected to the base 1; the crown gear 18 possesses a number of teeth equal to the number of the crown gear 9, for example corresponding to an angular spacing between successive teeth of one degree, or half a degree, depending upon the dimensions of the crown wheels themselves and in relation to the accuracy of positioning desired.

A ring with two rows of teeth 19 is situated facing the crown gears 9, 18, and is adapted to couple to them; the ring 19 is connected to an annular piston 20, axially slidable in an associated seating of the base 1 and equipped with hydraulic supply ducts 21, 22, respectively for the lower chamber 23 and for the upper chamber 24, separated from each other by the piston 20.

The supply of hydraulic fluid to the one or the other chamber 23, 24 determines respectively raising of the ring 19 off the frontal sets of teeth of the gear wheel 9, 18, permitting their relative rotation in order to allow the rotating body 3 to be moved, by means of the worm screw 12, into the desired angular position, or lowering of the ring 19 into engagement with the gear wheels 9, 18 and clamping onto these gear wheels, thereby blocking their relative angular position defined by the sets of teeth of the gear wheels.

The toothed wheel 11 carries, rigidly secured to it, a ring 25, engaged with the elastic jaw 26 of an annular brake pincer 27, free of any angular backlash; in the form of embodiment illustrated, the pincers 27 possesses a chamber 28, hydraulically supplied through a duct 29: the pressure in said chamber 28 causes an elastic deformation of the jaw 26, which clamps onto the ring 25, bending the latter and pressing it onto the fixed base 1, thereby blocking any angular position adopted by the rotating body 3.

With the rotating table according to this invention, it is therefore possible, either to block the rotating body 3 in the angular positions defined by the sets of teeth of the gear wheels 9, 18, that is to say for example by fixing at each degree or each half degree, causing for this purpose lowering and engaging of the ring 19 onto said gear wheels when the body has been placed in the desired position, or to block it in any angular position, defined by means of the angular positional sensor 16, 17, by keeping the ring 19 in a raised position for this purpose and causing the annular brake pincers 27 to grip onto the ring 25.

In this manner, it is then possible to carry out the machining operations with predetermined angular stops, usually the most frequent, obtaining the associated advantages of high precision in the stopping position and of high rigidity of fixing, which enables the especially high tangential machining forces to be resisted; when, instead, it is necessary to carry out machining operations with stopping of the table in any angular position that is not permitted by the subdivision of the teeth of the crown gears 9, 18, use may be made of blocking of the table provided by the brake, the standards of stopping positional accuracy and of tangential rigidity of the stepless system, which usually are not as high as the corresponding values of the system of predetermined stops, being usually sufficient in such conditions.

The gripping of the crown gears 9, 18 by means of the ring 19 is carried out by supplying pressurized hydraulic fluid into the chamber 24 via the duct 21; the pressure of the fluid should be such as to ensure, given the angles of slope of the flanks of the teeth of the crown gears 9, 18, that under the effect of the tangential machining forces there shall not be, in the teeth themselves, an axial component of force such as to cause lifting of the ring 19 which, even through limited, could lead to an unacceptable loss of accuracy in the angular position.

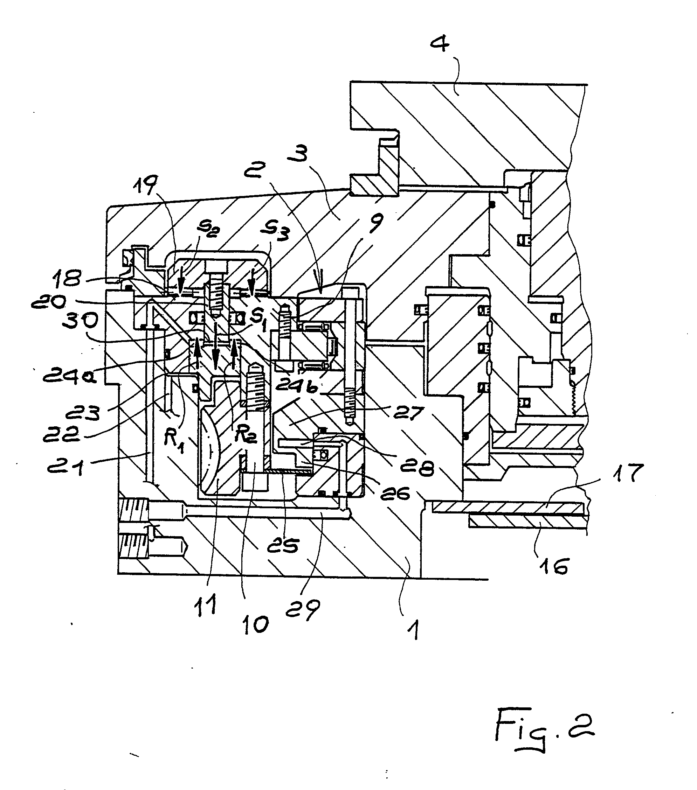

For this purpose, the hydraulic pressure supplied to the chamber 24 is such as to cause a thrust $S_1$ on the piston 20 which corresponds to the relative axial thrusts $S_2$ and $S_3$ respectively on the crown gears 18 and 9, as indicated in Figure 2.

Of these axial thrusts, the thrust $S_2$ acts against the fixed gear wheel 18, rigidly connected to the base 1, and is transferred to the latter; the thrust $S_3$, in contrast, acts on the movable crown gear 9 and therefore produces a downward loading on this gear.

This load, of appreciable magnitude, if it were not counteracted, would be transmitted to the bearing 2, which would therefore be loaded beyond its resistance capacity; the presence of fixed bearing surfaces, against which the crown gear 9 would come into bearing when downwardly loaded, cannot be achieved in the present case, because the structure of the bearing 2, which has no play as already mentioned, does not permit the axial yielding movements required for carrying out such a transfer of load without adopting unacceptable internal forces.

To prevent this, the chamber 24 is subdivided into two annular parts 24a, 24b, as can be seen in Figure 2, defined respectively between the piston 20 and the crown gear 18 and between the piston 20 and the crown gear 9, these chambers being connected together by a hydraulic communication duct 30.

In this manner, there correspond to the thrust $S_1$ acting on the piston 20, two reactions $R_1$ and $R_2$, respectively against the crown gear 18 and the crown gear 9, caused by the pressure of the fluid in the annular parts 24a, 24b of the chamber 24; these reactions $R_1$ and $R_2$ substantially correspond to the thrusts $S_2$ and $S_3$ respectively, and in particular ensure that the crown gear 9 is subjected to axial thrusts $S_3$ and $R_2$ which are counter-balancing, thereby relieving the bearing 2 from the blocking forces.

The relative positions of the crown gears 9, 18 and of the brake 27 have been selected in the arrangement shown on the basis of requirements of structural compactness and strength; in different conditions, however, the relevant arrangements of such members could be otherwise, for example by locating the brake and the associated ring 25 in a position further out, thereby increasing the braking torque for a given clamping force on the ring, but in such cases increasing the dimensions in the radial or axial direction of the fixed component of the rotating table, if this is permitted.

In the specifiation and in the claims, reference is made to a horizontal position of the table, which is the most common in practice, and the terms high, low, below, above etc. used are related to this orientation; in the case of a different arrangement, in different forms of embodiment of the invention, such terms, as will be clear, should be modified to achieve proper understanding of the text.

Numerous variants can be introduced, without thereby departing from the scope of the invention in its general characteristics.

## Claims

1. Workpiece-carrying rotating table for machine tools with discrete and steplessly selectable fixing positions, characterized by the fact that it is composed of a rotatable body, supported by a preloaded rolling support without play on a fixed base, to which body there may be connected a table, to which workpieces may be secured for the purpose of machining them, which body is equipped with a rotary member capable of being stopped in any preselected position, associated with a precision angular reading device, and possesses members for blocking in predetermined positions comprising frontally toothed crown gears which can be reciprocally engaged for blocking and disengaged for rotation, and members for blocking in any steplessly preselected positions, comprising a brake pincer capable of being clamped onto a ring integral with the rotatable body, the frontally toothed crown gears remaining in the disengaged position in such conditions.

2. Workpiece-carrying rotating table for machine tools with discrete and steplessly selectable fixing positions, according to Claim 1, characterized by the fact that the members for blocking in predetermined positions comprise a frontally toothed crown gear carried by the fixed base, concentric with a frontally toothed crown gear carried by the rotatable body, a frontally toothed, axially movable ring being present opposite the aforementioned crown gears and capable of being simultaneously engaged with them, this ring being carried by an annular piston defining, between fixed base and rotatable body, closed chambers which can be hydraulically supplied under control with pressurized fluid, adapted for moving the annular piston axially between a raised position of disengagement of the axially movable ring carried by it from the crown gears of the rotatable body and of the fixed base, and a lowered position of engagement of the axially movable ring with the crown gears themselves.

3. Workpiece-carrying rotating table for machine tools with discrete and steplessly selectable fixing positions, according to Claim 2, characterized by the fact that the rotatable body, in conditions of blocking in predetermined positions, is subjected to axial forces that are at least partly counter-balancing.

4. Workpiece-carrying rotating table for machine tools with discrete and steplessly selectable fixing positions, according to Claims 2, 3, characterized by the fact that the annular piston defines a chamber between its upwardly facing surface and a corresponding, downwardly facing surface of] the rotatable body, the chamber being able to be supplied with pressurized hydraulic fluid, adapted for producing, when fed into the chamber, a downward thrust upon the piston and a corresponding upward thrust upon the rotatable body, the downward thrust upon the piston being transmitted to the toothed ring secured to it and from this ring to the frontally toothed crown gear of the rotatable body, in at least partial equilibrium with the aforementioned upward thrust of the fluid on the rotatable body.

5. Workpiece-carrying rotating table for machine tools with discrete and steplessly selectable fixing positions, according to Claims 1, 2, characterized by the fact that the members for blocking in any positions comprise a ring integral with the rotatable body and an annular jaw integral with the fixed base and capable of being clamped onto the ring by means of actuator devices, the jaw being adapted for developing, by friction on the ring, a reaction in a tangential direction which exceeds the maximum machining tangential forces envisaged to act on a workpiece mounted on the table, even with the frontally toothed ring in a raised position in which it is disengaged from the corresponding frontally toothed crown gears.

Fig. 1

Fig. 2

## DOCUMENTS CONSIDERED TO BE RELEVANT

EP 88201074.7

| Category | Citation of document with indication, where appropriate, of relevant passages | Relevant to claim | CLASSIFICATION OF THE APPLICATION (Int. Cl.4) |
|---|---|---|---|
| Y | DE - A1 - 2 628 677 (H.RÜCKLE KG)<br>* Totality * | 1 | B 23 Q 16/00 |
| A | | 2,3,4 | |
| | -- | | |
| Y | GB - A - 2 103 522 (BARUFFALDI FRIZIONI SPA)<br>* Abstract; fig. 1 * | 1 | |
| | -- | | |
| A | GB - A - 2 094 678 (A.G.DAVIS GAGE)<br>* Fig. 1-5 * | 1,2 | |
| | -- | | |
| A | US - A - 3 961 780 (SAJ)<br>* Fig. 2,3 * | 1,2 | |
| | -- | | |
| A | US - A - 3 797 333 (MAIER)<br>* Abstract; fig. * | 1,2 | TECHNICAL FIELDS SEARCHED (Int. Cl.4) |
| | -- | | B 23 Q 1/00 |
| A | GB - A - 1 571 041 (CINCINNATI MILACRON INC.)<br>* Fig. 2,4 * | 1,2 | B 23 Q 3/00<br>B 23 Q 16/00<br>B 23 C 1/00 |
| | -- | | B 23 C 3/00 |
| P,A | DD - A1 - 250 077 (VEB)<br>* Fig. 1 * | 1,5 | |
| | -- | | |
| A | CH - A5 - 570 238 (E.BLUM & CO)<br>* Fig. 9 * | 1,2 | |
| | ---- | | |

The present search report has been drawn up for all claims

| Place of search | Date of completion of the search | Examiner |
|---|---|---|
| VIENNA | 05-09-1988 | NIMMERRICHTER |